# EUROPÄISCHE PATENTSCHRIFT

(11) **EP 1 829 640 B1**
(45) Veröffentlichungstag und Bekanntmachung des Hinweises auf die Patenterteilung: **28.11.2012**
(21) Anmeldenummer: 07003962.3
(22) Anmeldetag: 27.02.2007
(51) Int. Cl.: B23K 26/24, B23K 26/32, B23K 37/04, B23K 101/34

(54) **Verfahren und Vorrichtung zum Spannen von mittels eines Hochenergie-Schweißstrahls zu verschweißenden, einen Beschichtungswerkstoff aufweisenden Blechen**
Method and device for clamping sheets containing a coating substance which are to be welded using a high energy welding beam
Procédé et dispositif pour la tension de tôles présentant une matière première de revêtement devant être soudée à l'aide d'un rayon de soudage à énergie élevée

(30) Priorität: 03.03.2006 DE 102006009868
(43) Veröffentlichungstag der Anmeldung: 05.09.2007
(73) Patentinhaber: ThyssenKrupp System Engineering GmbH, 74076 Heilbronn (DE)
(72) Erfinder: Günther, Holger, 09599 Freiberg (DE); Jansche, Mirko, 08393 Meerane (DE); Jucht, Horst, 09337 Hohenstein-Ernstthal (DE)
(74) Vertreter: Findeisen Hübner Neumann

(56) Entgegenhaltungen:
- EP-A- 1 464 437
- EP-A- 1 629 931
- EP-A2- 1 238 748
- US-A1- 2005 242 067

## Beschreibung

Die Erfindung betrifft eine Vorrichtung und ein Verfahren zum Spannen von mittels eines Hochenergie-Schweißstrahls zu verschweißenden, einen Beschichtungswerkstoff aufweisenden Blechen, wobei die Bleche von mit einem Schweißkopf mitlaufenden und sich gegenüberliegenden Andrückelementen beaufschlagt werden. Anwendung findet die Erfindung insbesondere beim Laserschweißen von Kraftfahrzeug-Karosserien.

Eine solche Vorrichtung und Verfahren ist z.B. aus US 2005/0242067 A1 bekannt.

Aus der DE 102 59 604 B4 ist eine Lösung bekannt, bei der die als Umformrollen ausgestalteten Andrückelemente gegen die miteinander zu verschweißenden Bleche unter hohem Druck derartig anpressbar sind, dass diese eine Umformung erfahren und dabei die freien Enden der Bleche um einen spitzen Winkel auseinander klaffen lassen. Dadurch werden Ableitungskanäle für die entstehenden Gase gebildet, die damit aus dem Nahtbereich seitlich entweichen können. Da zwischen den Blechen im Bereich der Umformrollen immer ein Flächenkontakt aufrechterhalten wird und damit an dieser Stelle ein so genannter Nullspalt gegeben ist, können die Gase nur einseitig abgeführt werden, so dass bei dieser kraftgesteuerten Lösung eine qualitätsmindernde Beeinträchtigung der Schweißnaht durch die Gase nicht ausgeschlossen werden kann.

Zur Vermeidung dieses Nachteils wird daher angestrebt, dass die Bleche nicht mit einem Nullspalt aufeinander liegen, sondern ein schmaler Entgasungsspalt zwischen den Blechen erhalten bleibt. Durch einen derartigen Zwischenraum können die Schweißemissionen, wie z. B. die verdampfende Zinkbeschichtung, allseitig entweichen. Eine derartige Lösung, bei der die Andrückelemente als zwei einander gegenüberliegenden Andrückrollen ausgeführt sind, geht aus der DE 201 12 510 U1 hervor. Dabei sind die Andrückrollen über Anschläge auf einen bestimmten Abstand zueinander einstellbar, wodurch eine definierte Entgasungsspaltbildung zwischen den Blechen abgesichert werden kann.

Ein Nachtteil dieser Lösung ist durch die stets gegen einen voreingestellten Anschlag fahrenden Andrückrollen und die damit erfolgende Lagefixierung der Bleche darin zu sehen, dass die sich aus den Toleranzen der Dicke und Formabweichungen der Bleche ergebenden Auswirkungen auf den Entgasungsspalt keine ausreichende Berücksichtigung finden können. Außerdem ist es innerhalb einer Kraftfahrzeug-Karosserie nicht möglich, Schweißaufgaben an unterschiedlich dicke Blechkombinationen (z. B. Zweiblechschweißungen, Dreiblechschweißungen oder in Schweißrichtung stufenförmig abgesetzten Blechkombinationen - so genannte "Tailored Blanks") bei Sicherung des erforderlichen Entgasungsspaltes mit ein und derselben Spannvorrichtung in Verbindung mit dem Schweißkopf durchzuführen.

Die Aufgabe der Erfindung besteht darin, eine Vorrichtung und ein Verfahren vorzuschlagen, mit denen eine wirksame Einstellung des Entgasungsspaltes unter Berücksichtigung der Toleranzen in der Dicke und Formabweichungen der Bleche abgesichert werden kann, wobei außerdem innerhalb einer Kraftfahrzeug-Karosserie auch Schweißaufgaben an unterschiedlich dicken Blechkombinationen (z. B. Zweiblechschweißungen, Dreiblechschweißungen, in Schweißrichtung stufenförmig abgesetzten Blechkombinationen - so genannte "Tailored Blanks") bei Gewährleistung des erforderlichen Entgasungsspaltes mit ein und derselben Spannvorrichtung in Verbindung mit dem Schweißkopf ausführbar sein sollen.

Diese Aufgabe wird einerseits bei einer gattungsgemäßen Vorrichtung mit den im Kennzeichen des Patentanspruchs 1 angegebenen Merkmalen gelöst. Andererseits erfolgt die Lösung der Aufgabe bei einem gattungsgemäßen Verfahren durch die kennzeichnenden Merkmale des Patentanspruchs 4.

Die Vorteile der Erfindung bestehen darin, dass die tatsächliche Dicke der zu schweißenden Blechkombination zunächst durch das Zusammenpressen der Bleche mit den Andrückelementen abgegriffen und von dieser Bezugsgröße aus die Einstellung des Entgasungsspaltes vorgenommen wird. Dadurch wird es auch ermöglicht, dass innerhalb einer Kraftfahrzeug-Karosserie Schweißaufgaben an unterschiedlich dicken Blechkombinationen unter Sicherung des erforderlichen Entgasungsspaltes mit ein und derselben Spannvorrichtung in Verbindung mit dem Schweißkopf ausgeführt werden können.

Vorteilhafte Weiterbildungen der Vorrichtung gehen aus den Patentansprüchen 2 und 3 hervor.

Die Erfindung soll nachfolgend an einem Ausführungsbeispiel und zugehörigen Zeichnungen näher erläutert werden.

Es zeigen:
- Fig. 1: eine geschnittene Seitenansicht des prinzipiellen Aufbaus der erfindungsgemäßen Spannvorrichtung, in der die Bleche bei stehender Spannvorrichtung am Ausgangspunkt der Schweißnaht zusammengepresst sind
- Fig. 2: eine geschnittene Seitenansicht des prinzipiellen Aufbaus der erfindungsgemäßen Spannvorrichtung, in der die Bleche bei stehender Spannvorrichtung am Ausgangspunkt der Schweißnaht um den Entgasungsspalt beabstandet dargestellt sind
- Fig. 3: eine geschnittene Seitenansicht des prinzipiellen Aufbaus der erfindungsgemäßen Spannvorrichtung, in der die Bleche bei stehender Spannvorrichtung am Ausgangspunkt der Schweißnaht unmittelbar vor dem Zusammenpressen durch die Andrückelemente stehen

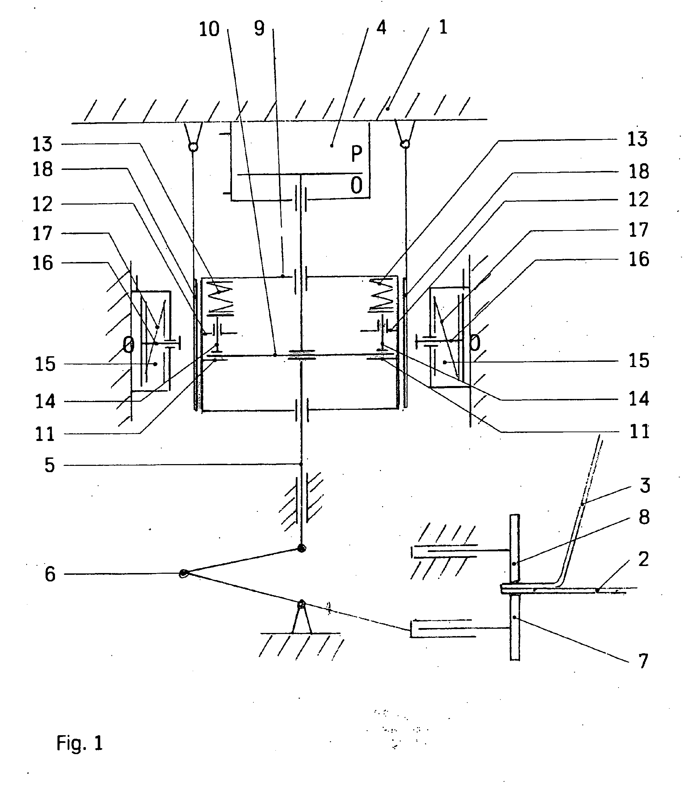

In der Fig. 1 ist ein die Spannvorrichtung tragendes Gestell 1 gezeigt. Dieses Gestell 1 ist außerdem mit einem nicht dargestellten Laserschweißkopf verbunden. Das Gestell 1 und der Laserschweißkopf werden beispielsweise an einem nicht gezeigten Arm eines Roboters geführt, so dass diese entlang der mittels eines Laserstrahles zu verschweißenden, einen Beschichtungswerkstoff (z. B. Zink) aufweisenden Bleche 2, 3 einer Kraftfahrzeug-Karosserie bewegbar sind.
Zum Spannen der Bleche 2, 3 ist am Gestell 1 weiterhin ein Spannzylinder 4 mit einer Druckstange 5 vorgesehen, wobei die Druckstange 5 über einer Kniehebel 6 mit einem kreisbogenförmig schwenkbeweglich ausgestalteten unteren Andrückelement 7 in Form einer drehbaren Spannrolle in Wirkverbindung steht. Dem unteren Andrückelement 7 gegenüberliegend ist ein als Gegenhalter wirkendes oberes Andrückelement 8 angeordnet, welches starr am Gestell 1 gelagert und ebenfalls als drehbare Spannrolle ausgestaltet ist. Anstelle der drehbaren Spannrollen können die Andrückelemente 7, 8 auch als auf den Blechen 2, 3 schleifend geführte Spannfinger ausgeführt sein. Die Druckstange 5 ist durch einen Ausgleichkorb 9 hindurchgeführt, der eine Querstange 10 beinhaltet, welche im Bereich zwischen einer unteren Auflage 11 und einer oberen Auflage 12 verstellbar ist. Dabei wird die Querstange 10 von einem durch eine Feder 13 beaufschlagten Druckstück 14 unter Vorspannung gehalten. Beiderseits des Ausgleichkorbes 9 befindet sich am Gestell 1 ein Zylinder 15 mit einer Klemmstange 16 und einer Rückstellfeder 17, so dass die Klemmstangen 16 die Beweglichkeit des Ausgleichkorbes 9 entlang der Achse der Druckstange 5 dadurch unterbinden können, indem sie mit auf beiden Seiten des Ausgleichkorbes 9 vorgesehenen und am Gestell 1 gehaltenen Klemmwangen 18 in Wirkverbindung bringbar ausgebildet sind.

Nachfolgend soll die Funktionsweise des erfindungsgemäßen Verfahrens und der danach arbeitenden Vorrichtung erläutert werden:

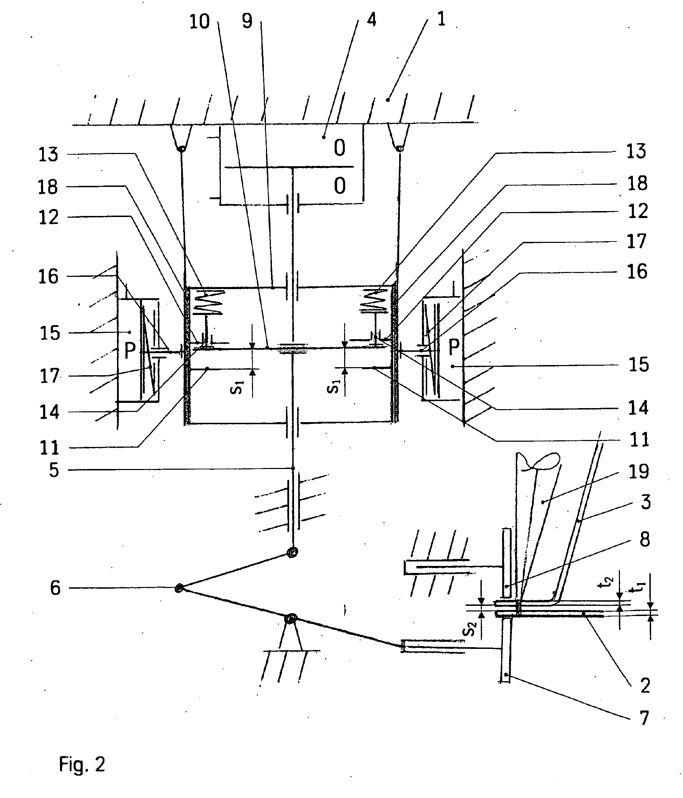

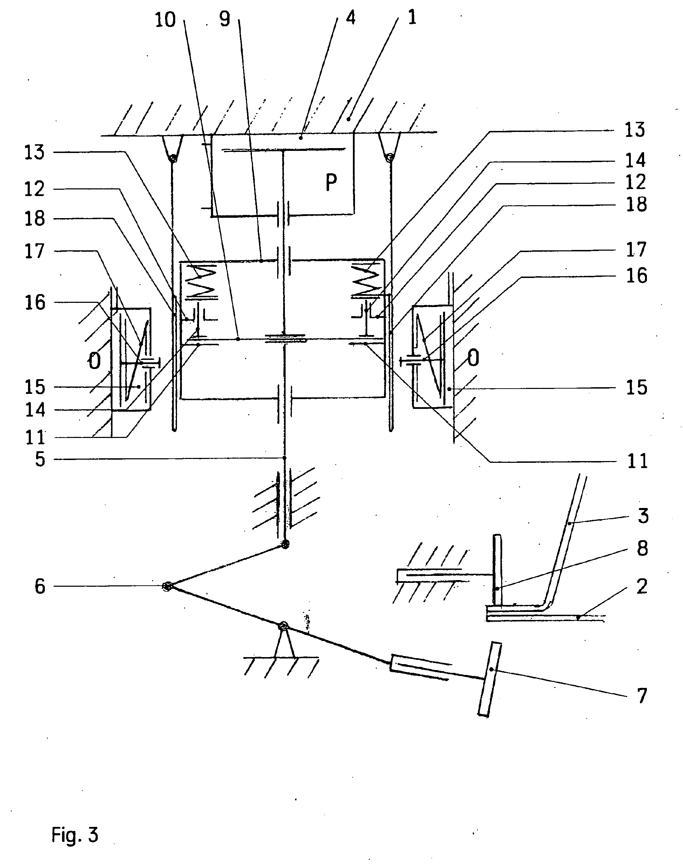

Nachdem die Spannvorrichtung mit dem Laserschweißkopf mittels des Roboters im Bereich der zu verschweißenden Bleche 2, 3 positioniert worden ist (Fig. 3), drückt der Spannzylinder 4 die Druckstange 5 und die damit verbundene Querstange 10 nach unten. Dadurch werden am Ausgangspunkt der Schweißnaht über den Kniehebel 6 die Bleche 2, 3 auf Nullspalt (d. h., es existiert kein Entgasungsspalt) zwischen oberem Andrückelement 8 und unterem Andrückelement 7 zusammengepresst. Gleichzeitig wird zwischen den federnden Druckstücken 14 und den unteren Auflagen 11 die Querstange 10 eingespannt. Außerdem kann der Ausgleichskorb 9 zwischen den freien Klemmwangen 18 und den eingefahrenen Klemmstangen 16 der Zylinder 15 mit nach unten bewegt werden, so dass die Bauteile ihre in der Fig. 1 gezeigten Positionen einnehmen.
Nachfolgend pressen die Klemmstangen 16 der Zylinder 15 gegen die Kraft ihrer Rückstellfedern 17 die Klemmwangen 18 gegen den Ausgleichskorb 9. Die senkrechte Beweglichkeit des Ausgleichskorbes 9 wird durch Haftreibung zwischen diesem und den Klemmwangen 18 blockiert (Fig. 2). Durch Druckentlastung des Spannzylinders 4 drücken die auffedernden Bleche 2, 3 über die untere Spannrolle 7 und den Kniehebel 6 die Druckstange 5 nach oben. Da der Ausgleichskorb 9 festgeklemmt ist, kann sich die Druckstange 5 mit der Querstange 10 nur soweit nach oben bewegen bis das federnde Druckstück 14 zusammengedrückt ist und die Querstange 10 an der oberen Auflage 12 anliegt. Die Querstange 10 bewegt sich mit der Druckstange 5 somit zwischen unterer Auflage 11 und oberer Auflage 12 im Bereich des Druckstangenspiels (s₁). Damit kann sich über Kniehebel 6 und unteren Andrückelement 7 innerhalb deren Übersetzungsverhältnis ein maximaler Entgasungsspalt (s₂) zwischen den Blechen 2, 3 einstellen. Mit dieser Einstellung bewegt sich die Spannvorrichtung mit dem beispielsweise als Laserschweißkopf ausgeführten Schweißkopf quer zur Achse der Andrückelemente 7, 8 an den Blechen 2, 3 entlang, wobei diese vom Laserstrahl 19 durch Schmelzschweißen verbunden werden. Voraussetzung für den Einsatz der Spannvorrichtung ist, dass über die Schweißnahtlänge die Summe der Dicke t₁, t₂ der Bleche 2, 3 konstant ist. Beim Schweißen von anderen Blechdicken oder einem Versatz der Spannvorrichtung an eine andere Stelle der Kraftfahrzeug-Karosserie wiederholt sich die oben beschriebene Verfahrensweise, wobei zunächst der jeweilige Zylinder 15 mit der Klemmstange 16 drucklos gestellt und dadurch die Klemmstange 16 von der Rückstellfeder 17 in ihre Ausgangslage gebracht wird. Die Haftreibung zwischen Klemmwange 18 und Ausgleichskorb 9 ist somit aufgehoben. Der Spannzylinder 4 wird aufwärts mit Druck beaufschlagt und zieht die Druckstange 5, die Querstange 10 sowie den Ausgleichskorb 9 in Ausgangslage gemäß Fig. 1. Dabei bewegt sich über den Kniehebel 6 auch das untere Andrückelement 7 von den Blechen 2, 3 weg. Die mit dem Laserschweißkopf gekoppelte Spannvorrichtung ist damit bereit für eine Positionsänderung innerhalb der Kraftfahrzeug-Karosserie. Dazu wird sie an eine weitere Bearbeitungsstelle der Karosserie umgesetzt, an der eine von der bereits erfolgten Schweißaufgabe hinsichtlich ihre Dicke abweichende Blechkombination zu verschweißen ist. Dabei erfolgt der oben geschilderte Verfahrensablauf erneut, wobei auch diese Schweißung unter Verwendung von ein und derselben Spannvorrichtung durchgeführt werden kann.

### Bezugszeichenliste

- 1: Gestell
- 2: unteres Blech
- 3: oberes Blech
- 4: Spannzylinder
- 5: Druckstange
- 6: Kniehebel
- 7: unteres Andrückelement
- 8: oberes Andrückelement
- 9: Ausgleichkorb
- 10: Querstange
- 11: untere Auflage
- 12: obere Auflage
- 13: Feder
- 14: Druckstück
- 15: Zylinder
- 16: Klemmstange
- 17: Rückstellfeder
- 18: Klemmwangen
- 19: Laserstrahl
- S₁: Druckstangenspiel
- S₂: maximaler Entgasungsspalt
- t₁: Dicke des unteren Bleches 2
- t₂: Dicke des oberen Bleches 3

## Patentansprüche

1. Vorrichtung zur Durchführung eines Verfahrens zum Spannen von mittels eines Hochenergie-Schweißstrahls zu verschweißenden, einen Beschichtungswerkstoff aufweisenden Blechen, bestehend aus zwei die Bleche (2, 3) beaufschlagenden, einander gegenüberliegenden Andrückelementen, wobei das eine Andrückelement (8) starr in einem Gestell (1) gelagert und als Gegenhalter gegenüber dem anderen, beweglich ausgestalteten Andrückelement (7) ausgeführt ist,
**dadurch gekennzeichnet,**
**dass** am Gestell (1) ein Spannzylinder (4) mit einer Druckstange (5) vorgesehen ist, wobei die Druckstange (5) über einer Kniehebel (6) mit dem beweglich ausgestalteten Andrückelement (7) in Wirkverbindung steht, die Druckstange (5) durch einen Ausgleichkorb (9) hindurchgeführt ist, der eine Querstange (10) beinhaltet, die im Bereich zwischen einer unteren Auflage (11) und einer oberen Auflage (12) verstellbar ist und dabei von einem durch eine Feder (13) beaufschlagten Druckstück (14) unter Vorspannung gehalten wird, dass beiderseits des Ausgleichkorbes (9) am Gestell (1) ein Zylinder (15) mit einer Klemmstange (16) und einer Rückstellfeder (17) derartig angeordnet ist, dass die Klemmstangen (16) die Beweglichkeit des Ausgleichkorbes (9) entlang der Achse der Druckstange (5) dadurch unterbinden können, dass sie mit auf beiden Seiten des Ausgleichkorbes (9) vorgesehenen und am Gestell (1) gehaltenen Klemmwangen (18) in Wirkverbindung bringbar ausgestaltet sind.

2. Vorrichtung nach Patentanspruch 1,
**dadurch gekennzeichnet,**
**dass** die Andrückelemente (7, 8) als drehbare Spannrollen ausgestaltet sind.

3. Vorrichtung nach Patentanspruch 1,
**dadurch gekennzeichnet,**
**dass** Andrückelemente (7, 8) als Spannfinger ausgebildet sind.

4. Verfahren zum Spannen von mittels eines Hochenergie-Schweißstrahls zu verschweißenden, einen Beschichtungswerkstoff aufweisenden Blechen, wobei die Bleche von mit einem Schweißkopf mitlaufenden und sich gegenüberliegenden Andrückelementen beaufschlagt werden,
**dadurch gekennzeichnet,**
**dass** mit einer Vorrichtung nach einem der Vorrichtungsansprüche 1 bis 3 die Andrückelemente (7, 8) gegen die Bleche (2, 3) gepresst werden und diese Anpressung nachfolgend aufgehoben wird, wobei sich durch die an der Kontaktstelle der Bleche (2, 3) bestehenden Formabweichungen selbsttätig ein in seiner Größe anschlagmäßig begrenzbarer, maximaler Entgasungsspalt (s₂) einstellt.

## Claims

1. A device for performing a method for clamping sheets containing a coating substance which are to be welded using a high-energy welding beam, consisting of two contact pressure elements that apply pressure to the sheets (2, 3), wherein the one contact pressure element (8) is rigidly supported in a rack (1) and designed as a counterholder versus the other, movably designed contact pressure element (7),
**characterized in that**
a clamping cylinder (4) with a push rod (5) is provided on the rack (1), and said push rod (5) is in effective connection with the movably designed contact pressure element (7) via a knee lever (6), said push rod (5) is conducted through an equalizing basket (9) which contains a transverse rod (10) that can be adjusted between a lower support (11) and an upper support (12) and is kept under pretension by a pressure piece (14) loaded by a spring (13), **in that** a cylinder (15) with a clamping rod (16) and a return spring (17) is arranged on both sides of said equalizing basket (9) on the rack (1) such that the clamping rods (16) can prevent the equalizing basket (9) from moving along the axis of push rod (5) **in that** they are designed to be brought into effective connection with clamping jaws (18) provided on both sides of the equalizing basket (9) and held on the rack (1).

2. The device according to claim 1,
**characterized in that**
the contact pressure elements (7, 8) are designed as rotatable clamping rollers.

3. The device according to claim 1,
**characterized in that**
contact pressure elements (7, 8) are designed as clamping fingers.

4. A method for clamping sheets containing a coating substance which are to be welded using a high-energy welding beam, wherein pressure is applied to said sheets by contact pressure elements that are arranged opposite to one another and idling along with a welding head.
**characterized in that**
the contact pressure elements (7, 8) are pressed against the sheets (2, 3) using a device according to any one of the device claims 1 to 3, and that this contact pressure is subsequently suspended, wherein a maximum degasing gap (S₂) is automatically formed at the contact point of the sheets (2, 3) that can be limited in size using stops.

## Revendications

1. Dispositif pour la réalisation d'un procédé de serrage pour tôles présentant un matériau de revêtement et devant être soudée à l'aide d'un rayon de soudage à énergie élevée, composé de deux éléments de pression de contact assurant l'application de la pression aux tôles (2, 3) qui, eux, sont fixés et disposés de forme opposée dans un châssis (1), l'un de ces éléments de pression de contact (8) étant fixé de manière rigide dans un châssis (1) et conçu en tant que matrice de l'autre élément de pression de contact (7) qui, lui, est monté sous forme mobile,
**caractérisé en ce**
**qu'**un cylindre de serrage (4) avec une tige de pression (5) est prévu sur le châssis (1), que cette tige de pression (5) est liée avec l'élément de pression de contact mobile (7) par une genouillère (6), que la tige de pression (5) passe à travers une cage de compensation (9) comprenant une barre transversale (10) qui, elle, peut être déplacée dans l'espace entre un support inférieur (11) et un support supérieur (12) et qui est maintenue sous pression initiale par un élément de serrage (14) actionné par un ressort (13), que sur le châssis (1), un cylindre (15) avec une tige de serrage (16) et un ressort de rappel (17) est disposé de part et d'autre de la cage de compensation (9), ceci de telle sorte que les tiges de serrage (16) peuvent, grâce aux mâchoires (18) disposées de part et d'autre de la cage de compensation (9) du châssis (1) et liées l'une avec l'autre, arrêter la mobilité de la cage de compensation (9) le long de l'axe de la tige de pression (5).

2. Dispositif suivant la revendication 1,
**caractérisé en ce**
**que** les éléments de pression de contact (7, 8) sont conçus en tant que galets tendeurs orientables.

3. Dispositif suivant la revendication 1,
**caractérisé en ce**
**que** les éléments de pression de contact (7, 8) sont conçus en tant que doigts de serrage.

4. Procédé de serrage pour tôles présentant un matériau de revêtement et devant être soudée à l'aide d'un rayon de soudage à énergie élevée, où ces tôles sont mises sous pression par des éléments de serrage étant disposés en forme opposée et allant en parallèle avec une tête de soudage,
caractérisé en ce
que' à l'aide d'un dispositif suivant l'une des revendications 1 à 3, les éléments de pression de contact (7, 8) sont pressés contre les tôles (2, 3) et que cette pression est supprimée après, ainsi que, grâce aux écarts de forme existant au niveau des points de contact des tôles (2, 3), la dimension d'une fente maximale de dégazage (S₂) limitée par butées est automatiquement réglée.
